# FASCICULE DE BREVET EUROPEEN

(11) **EP 1 036 917 B1**
(45) Date de publication et mention de la délivrance du brevet: **01.12.2004**
(21) Numéro de dépôt: 00400723.3
(22) Date de dépôt: 16.03.2000
(51) Int. Cl.: F01D 21/02, F02C 9/28, F01D 21/20

(54) **Architecture autotestable pour chaînes de limitation de survitesse et de coupure en stop de turboréacteur**
Selbsttestarchitektur für den Überdrehzahlschutz- und den Notausschaltkreislauf
Self-testable architecture for the overspeed protection and the emergency stop circuit

(30) Priorité: 18.03.1999 FR 9903338
(43) Date de publication de la demande: 20.09.2000
(73) Titulaire: HISPANO SUIZA, 92707 Colombes Cedex (FR)
(72) Inventeur: Brocard, Jean-Marie, 77950 Rubelles (FR); Garassino, Alain Pierre, 77390 Crisenoy (FR); Le Boeuf, Christian Denis, 91800 Brunoy (FR); Paya, Alain Patrick, 77820 Le Chatelet en Brie (FR); Varizat, Alain Michel, 77590 Bois Le Roi (FR)
(74) Mandataire: Nguyen, Dominique

(56) Documents cités:
- EP-A- 0 293 318
- US-A- 4 493 187
- US-A- 4 602 479
- US-A- 4 716 723
- US-A- 5 927 064

## Description

### Domaine de l'invention

L'invention se situe dans le domaine des méthodes pour la coupure en stop et pour la coupure en cas de survitesse d'un turboréacteur ainsi que dans les moyens de test de ces deux modes de coupure.

### Arrière plan technologique

Un turboréacteur dispose nécessairement d'un organe permettant de couper l'alimentation du carburant directement depuis le poste de pilotage de l'avion qu'il propulse. Il s'agit ici d'une exigence réglementaire.

Cette méthode de coupure du turboréacteur est appelée coupure en stop.

L'ensemble des éléments matériels contribuant au fonctionnement de la coupure en stop est appelé chaîne de coupure en stop.

D'autre part, un turboréacteur dispose nécessairement d'un organe permettant de le protéger contre des vitesses de rotation trop élevées (survitesse) afin d'éviter notamment l'explosion des disques de turbines.

Il s'agit également d'une exigence réglementaire.

Cette méthode de protection du turboréacteur est appelée protection de survitesse.

L'ensemble des éléments matériels et logiciels contribuant au fonctionnement de la protection survitesse est appelé chaîne de protection survitesse.

La coupure en stop est commandée du poste de pilotage de l'avion au moyen d'une manette d'arrêt moteur appelé levier maître. Cette dernière peut être confondue avec la manette des gaz, la position de coupure correspondant alors à une position particulière de cette manette.

La coupure en survitesse est automatique et résulte d'une détection de la vitesse de rotation de l'arbre moteur excédant d'un pourcentage prédéterminé la vitesse de rotation maximum autorisée.

La détection de vitesse peut être effectuée au niveau de l'attelage basse pression et l'on parlera alors du nombre de tours N₁ ou de l'attelage haute pression et l'on parlera du nombre de tours N_{2.} La capture d'une grandeur variant avec N₁ ou N₂ permet la détection de survitesse.

De façon réglementaire, la coupure en stop et la coupure en survitesse doivent être testées entre un atterrissage et un nouveau décollage.

US-A-4 602 479 décrit un dispositif de commande d'alimentation en carburant d'un turboréacteur comportant une vanne de coupure de survitesse associée à une ligne d'alimentation en dérivation assurant un niveau minimal de poussée du turboréacteur.

Selon un état connu de la technique, le test de survitesse est effectué par l'action du système de protection de survitesse que l'on déclenche lors de l'arrêt du moteur après un atterrissage. Le déclenchement de cette protection est ramené préalablement au moyen d'un calculateur contrôlant le moteur, ou mécaniquement en changeant le tarage d'un ressort, à une valeur de vitesse de rotation inférieure à la vitesse de ralenti du moteur. L'extinction du moteur prouve le bon fonctionnement du système de protection survitesse qui est ainsi testé après chaque vol.

Le système de coupure en stop est, pour sa part vérifié au cours d'une opération de maintenance.

L'invention consiste à modifier et adapter l'architecture du régulateur hydromécanique carburant, celle de la logique du calculateur de régulation moteur ainsi que celle des boîtiers de détection de survitesse du turboréacteur.

L'adaptation de l'architecture et de la logique de fonctionnement permet ainsi de tester automatiquement le bon fonctionnement de l'ensemble de la chaîne de survitesse juste avant que le turboréacteur ne démarre.

Elle permet également de tester le fonctionnement de l'ensemble de la chaîne de coupure en stop au moment de l'arrêt du turboréacteur après un atterrissage.

En conséquence, la combinaison/optimisation de l'architecture du régulateur hydromécanique carburant avec celle du système électronique permet de tester automatiquement et complètement (taux de couverture égale à 100 %) le bon fonctionnement de l'ensemble des deux chaînes (protection survitesse et coupure en stop).

Ainsi l'invention est-elle relative d'une part à une méthode de commande et de test d'une chaîne d'arrêt en stop d'un moteur d'avion, le moteur comportant des moyens de régulation du débit de carburant alimentant des injecteurs du moteur, ces moyens calculant un débit autorisé de carburant des capteurs de détermination de la valeur du débit réel instantané alimentant les moteurs, un moyen de fermeture de l'arrivée du carburant arrivant aux injecteurs du moteur, ce moyen étant normalement ouvert et se fermant sous l'action de moyens d'actionnement commandables, dispositif caractérisé en ce que la coupure en stop du moteur est obtenue par l'actionnement d'un levier maître actionnable manuellement d'une première position à une seconde position, le passage à cette seconde position constituant la commande des moyens d'actionnement du moyen de fermeture de l'arrivée de carburant, et en ce que le test de bon fonctionnement de cet arrêt en stop est constitué par la mesure d'un écart entre le débit de carburant autorisé par les moyens de régulation du moteur et le débit réel de carburant mesuré par les capteurs de détermination de la valeur du débit instantané réel.

L'invention est relative d'autre part à une méthode de protection d'un moteur d'avion en survitesse, le moteur comportant des moyens de régulation du débit de carburant alimentant des injecteurs du moteur, ces moyens calculant un débit autorisé de carburant en fonction de la vitesse de rotation du moteur et de paramètres extérieurs, des capteurs de la valeur réelle du débit instantané alimentant les moteurs, un moyen de fermeture de l'arrivée du carburant arrivant aux injecteurs du moteur, ce moyen étant normalement ouvert et se fermant sous l'action de moyen d'actionnement commandables, des moyens de mesure de la vitesse de rotation instantanée du moteur, des moyens de fixation de seuils de vitesse de rotation instantanée dont le dépassement constitue la détection d'une survitesse, un premier seuil constituant le seuil de survitesse en test, et un second seuil constituant le seuil de survitesse réelle, dispositif caractérisé en ce que la détection de survitesse réelle ou en test est effectuée dans un module électronique logique recevant une grandeur représentant la valeur de la vitesse de rotation instantanée réelle du moteur, ce module comportant un commutateur d'état capable d'au moins deux états, un état de test et un état normal, ce module effectuant une comparaison de la vitesse de rotation réelle au seuil de survitesse en test, lorsque le commutateur d'état est dans l'état de test, et au seuil de survitesse réelle, lorsque le commutateur d'état est dans l'état normal. ce module délivrant une commande de fermeture en direction des moyens d'actionnement du moyen de fermeture de l'arrivée du carburant et en ce que le test du bon fonctionnement de l'arrêt en survitesse du moteur est constitué par la mesure d'un écart entre le débit de carburant autorisé par les moyens de régulation du moteur et le débit réel de carburant mesuré par les capteurs de la valeur réelle du débit instantané de carburant.

Un exemple détaillé de réalisation de l'invention sera maintenant décrit en regard des dessins annexés dans lesquels :
- la figure 1 représente un schéma de l'architecture hydraulique des chaînes de coupure en stop et de survitesse ;
- la figure 2 représente un schéma de l'architecture logique de commande des moyens hydrauliques représentés figure 1 ;
- la figure 3 montre les liaisons entre l'architecture logique et l'architecture hydraulique ;
- la figure 4 représente une chronologie d'une séquence de démarrage au sol avec test de la chaîne de survitesse ;
- la figure 5 représente une chronologie d'une séquence d'arrêt au sol avec test de la chaîne de coupure en stop ;
- la figure 6 représente une chronologie d'arrêt en vol sur erreur du pilote, puis rallumage sans test de survitesse ;
- la figure 7 représente une séquence d'arrêt en vol sur déclenchement de la protection survitesse puis rallumage sans test sur demande du pilote ;

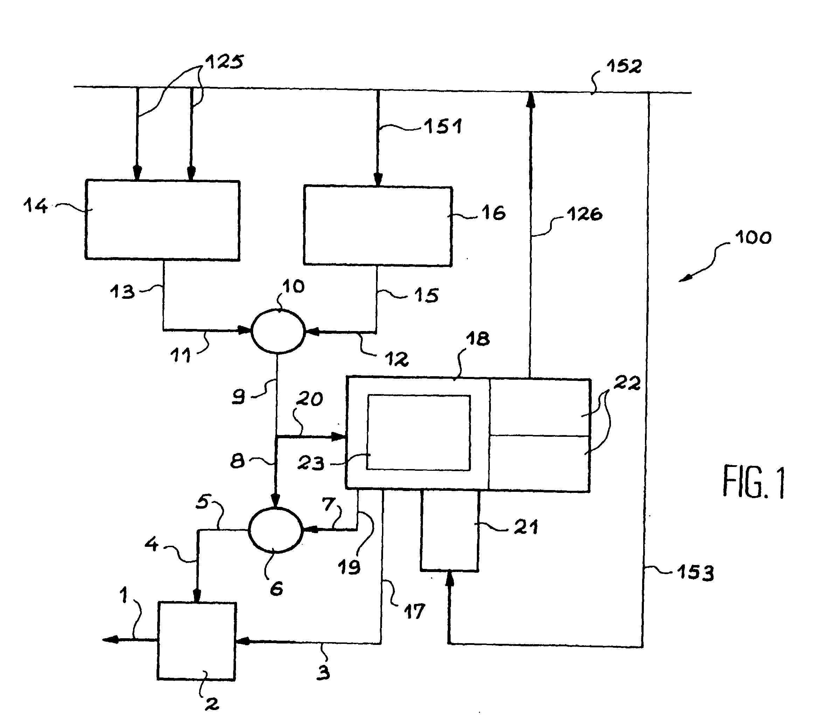

La figure 1 représente la partie utile à la compréhension de l'invention d'une unité hydraulique de contrôle de carburant 100.

Cette unité contrôle le débit de carburant W_{**f**} qui est envoyé vers des injecteurs de carburant non représentés à la sortie 1 d'un clapet stop 2. Le clapet stop a deux entrées, une première 3 et une seconde 4. Son comportement est le suivant. Lorsqu'une pression suffisante est reçue à l'entrée 4, le clapet est fermé. La sortie 1 n'est plus alimentée. Lorsque la pression d'entrée de carburant à la première entrée 3 est insuffisante, c'est à dire inférieure à une valeur minimum seuil, le clapet 2 est fermé et la sortie 1 n'est plus alimentée. Lorsque la pression à la première entrée 3 du doseur 2 est au-dessus du seuil et que la seconde entrée 4 n'est pas alimentée, le débit reçu à l'entrée 3 est intégralement transmis à la sortie 1.

L'agencement interne d'un tel clapet 2 pour obtenir le comportement décrit ci-dessus est en lui-même connu et ne sera pas décrit. La seconde entrée 4 du clapet 2 est en communication par l'intermédiaire d'une tuyauterie à la sortie 5 d'une première porte hydraulique "ou" 6 ayant deux entrées, une première 7 et une seconde 8. Cette porte "ou" 6 dirige vers sa sortie 5 le carburant reçu de l'une quelconque de ses deux entrées 7, 8. Le fonctionnement interne d'une telle porte est connu en soi et ne sera pas décrit. Notons cependant, que sous sa forme la plus simple, il peut s'agir d'un simple raccord.

La seconde entrée 8 de la première porte "ou" 6 est connectée à une sortie 9 d'une seconde porte "ou" 10. Cette seconde porte "ou" 10 a deux entrées, une première 11 et une seconde 12.

La première entrée 11 est connectée à une sortie 13 d'un premier électro-robinet 14. Il sera vu plus loin que ce premier robinet est un robinet de fermeture du clapet stop 2 en cas de détection d'une survitesse ou d'un test de survitesse.

La seconde entrée 12 de la porte hydraulique "ou" 10 est connectée à une sortie 15 d'un second électro-robinet 16. Il sera vu plus loin que ce second robinet est le robinet de fermeture en stop.

La première entrée 3, du clapet stop 2, est connectée par l'intermédiaire d'une tuyauterie à une première sortie 17, d'un doseur de carburant 18. Cette première sortie 17 est la sortie normale du doseur 18, c'est-à-dire la sortie recevant le débit de carburant W_{**f**} alimentant les injecteurs tant que ce fonctionnement s'effectue dans des conditions normales de sécurité. Une seconde sortie 19 du doseur 18 est connectée par l'intermédiaire d'une tuyauterie à la première entrée 7 de la première porte hydraulique "ou" 6. Cette seconde sortie 19 du doseur 18 transmet un signal de butée sous forme d'une pression de carburant lorsque le doseur 18 est en position de débit minimum.

Cette position de débit minimum est atteinte notamment par le fait qu'une entrée logique 20 du doseur 18 raccordée à la sortie 9 de la seconde porte "ou" 10 reçoit une alimentation sous forme d'une pression de carburant provenant de la sortie 9 de cette seconde porte "ou" 10.

De façon connue, le doseur 18 comporte tel que représenté symboliquement figure 1 un boisseau 23 dont le mouvement modifie la section de passage du carburant dirigé vers la sortie 17. Une valve de proportionnalité, non représentée, assure une différence de pression constante entre une entrée haute pression de carburant, non représentée, et la sortie 17. De même, de façon connue et non représentée, une soupape régulatrice assure le retour de l'excédent de carburant par rapport au débit W_{**f**} fourni au doseur par une pompe haute pression.

En fonctionnement normal une servovalve 21 assure le déplacement du boisseau 23 pour obtenir le débit de carburant W_{**f**} nécessaire au fonctionnement du moteur compte tenu des instructions d'un pilote et de paramètres extérieurs. La position 126 du boisseau 23 est connue grâce à des informations de position délivrées par des capteurs de position redondants 22. Ces informations sont traitées par un organe de contrôle non représenté qui reçoit, par ailleurs, les informations relatives aux commandes et aux conditions du vol. Cet organe de contrôle délivre un signal de commande 153 à des servovalves redondantes 21, qui commandent la position du boisseau 23 du doseur 18 pour l'adapter au régime moteur.

Cette partie normale du fonctionnement et de la régulation du débit de carburant en elle-même connue, n'intéresse pas la présente invention. On rappelle que la présente invention se situe dans le domaine de l'arrêt en stop, de l'arrêt en survitesse et dans le test de ces deux fonctions.

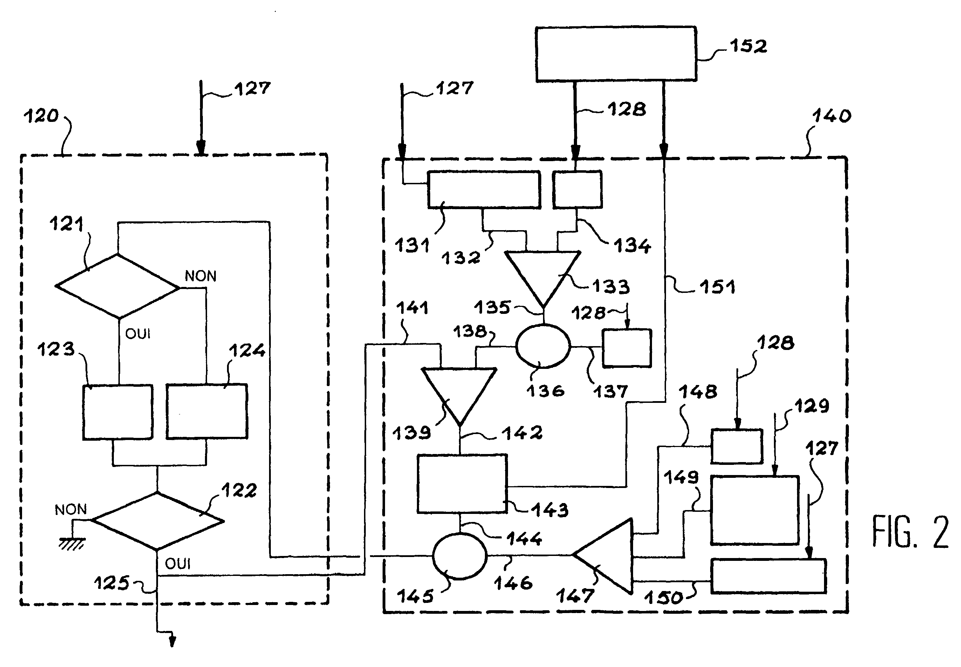

Des modules électroniques logiques 120 et 140 de commande et de contrôle de l'unité de contrôle carburant 100, relativement à l'arrêt en stop, en survitesse et au test de ces fonctions vont maintenant être décrits en liaison avec la figure 2.

Pour une meilleure compréhension de l'invention, il est précisé que de façon connue, la mise en fonctionnement d'un turboréacteur commence par une mise en rotation assistée du compresseur et de la turbine. Cette mise en rotation, lorsque l'avion est au sol, se fait au moyen d'un organe d'entraînement, par exemple un démarreur électrique ou une soufflante. Lorsque l'avion est en vol c'est le vent relatif qui joue le rôle de soufflante. L'injection et l'allumage du carburant n'intervient qu'au moment où le réacteur atteint une vitesse de rotation seuil, V_{**a**} si l'avion est au sol ou V_{**min**} si l'avion est en vol, assurant un débit d'air suffisant au niveau de la turbine. La montée en rotation peut ensuite continuer sans assistance extérieure grâce à l'énergie fournie par la combustion du carburant.

Le module 120 de contrôle et de commande de survitesse sera maintenant décrit.

Ce module reçoit en entrée une valeur 127 représentative de la vitesse de rotation du moteur, par exemple la vitesse de l'attelage basse pression N_{**1**} ou de l'attelage haute pression N_{**2**}, ou toute autre valeur représentative d'une vitesse de rotation du moteur dans la plage de valeur où est placée la survitesse à détecter.

Selon une première opération logique 121, il est posé la question "est-on dans une phase de test de la survitesse ?". La réponse à cette question est obtenue par la vérification d'un commutateur d'état ou d'une mémoire d'état 143. Dans l'exemple ici commenté, une valeur 1 correspond à une réponse positive.

Si la réponse est positive, on se pose la question dans un module 122 de savoir si la vitesse de rotation est supérieure à une valeur seuil. La réponse à cette question est obtenue par comparaison de la valeur réelle 127 de la vitesse de rotation reçue, avec une valeur seuil. Lorsque la phase dans laquelle on se trouve est une phase de test, la comparaison est effectuée dans un premier module comparateur 123. La vitesse test V_{**st**} de rotation seuil est une vitesse de rotation, inférieure à la valeur réelle V_{**sv**} où la survitesse réelle est atteinte. Cette vitesse test est selon l'invention choisie pour être inférieure à la vitesse V_{**a**} de rotation à partir de laquelle l'introduction du carburant dans les injecteurs est autorisée, l'avion étant au sol.

Dans l'exemple ici commenté, la valeur V_{**st**} de vitesse de rotation seuil pour le test a été fixée à 10 % de la vitesse de rotation maximum autorisée au sol. La vitesse d'introduction du carburant est égale à 22 % de cette même valeur.

Si la réponse en sortie de module 121 est non, ce qui signifie qu'on n'est pas en phase de test, on se pose la question toujours dans le module 122 de savoir si la vitesse de rotation est supérieure à une valeur seuil. Dans ce cas, la comparaison de la vitesse réelle avec la vitesse seuil de survitesse réelle V_{**sv**} est effectuée dans un second module comparateur 124.

Dans l'exemple ici représenté, la valeur réelle de survitesse est égale à 107 % de la valeur maximum autorisée compte tenu des paramètres extérieurs. De même, dans cet exemple, il est parlé de module comparateur et non de comparateur car la comparaison est effectuée par opération logique. Il pourrait naturellement s'agir de comparateur analogique. Si la réponse en sortie du module 122 est positive, ce qui signifie qu'on est au-dessus de la vitesse de survitesse test ou réelle, une commande 125 est envoyée vers l'électro-robinet 14 de l'unité hydraulique 100 pour ouvrir ce robinet et un signal positif est envoyé vers une porte "et" 139, dont il sera parlé plus loin.

On voit ainsi que le module de survitesse 120 est un module recevant la vitesse de rotation du moteur. ce module effectue en permanence une routine pour déterminer si la vitesse réelle de rotation est supérieure à un seuil, ce seuil étant le seuil de survitesse en test ou le seuil de survitesse réelle selon l'état d'un commutateur d'état 143 dont il va être parlé ci-après. L'état du commutateur d'état 143 passe de l'état de test par exemple la valeur 1 à l'état de non test, par exemple la valeur 0. Les changements d'état du commutateur d'état 143 sont gérés dans un module logique 140.

Le module logique 140 sera maintenant décrit. Ce module reçoit l'information 127 de vitesse de rotation, une information 128 sur la phase de vol permettant de savoir si l'avion est en vol ou au sol, et une information 151 sur la position du levier maître, par exemple, par un bus 152 au format ARINC. Il sera vu plus loin que l'information 151 est utilisée comme signal de commande de l'électro-robinet 16 de coupure en stop. Un premier module comparateur 131 du module logique 140 effectue la comparaison de la vitesse 127 avec la vitesse de rotation à partir de laquelle du carburant peut être introduit dans les injecteurs du moteur. La sortie 132 de cette comparaison constitue une première entrée pour une première porte logique "et" 133. Une seconde entrée 134 de cette porte "et" reçoit une information positive lorsque l'avion porteur du moteur est au sol. La porte "et" 133 délivre une entrée positive, par exemple, si à la fois, la vitesse de rotation moteur est supérieure au seuil d'introduction de carburant dans les injecteurs et l'avion est au sol. La sortie 135 de la première porte "et" 133 alimente une première porte logique "ou" 136. Une seconde entrée 137 de cette porte "ou" 136 reçoit une information positive lorsque l'avion est en vol. Ainsi la sortie de la porte "ou" 138 est positive si l'avion est au sol et que la vitesse de rotation du moteur est supérieure à la vitesse V_{**a**}, ou dans tous les cas si l'avion est en vol. La sortie 138 de la première porte "ou" 136 constitue une première entrée d'une seconde porte "et" 139. La seconde entrée 141 de la porte "et" 139 reçoit la réponse 125 à la sortie du module de comparaison 122. Si cette sortie est positive, c'est-à-dire si le nombre de tours est supérieur au seuil de survitesse réelle ou en test, la sortie 142 de la seconde porte "et" 139 est positive, ce qui change la valeur du commutateur d'état 143 dont il a déjà été parlé plus haut, lors de la description du module 120. Ce module d'état est réinitialisé à sa valeur de test chaque fois que le levier maître est basculé dans la position allumée, l'avion étant au sol. La sortie 144 de ce commutateur d'état constitue une entrée d'une seconde porte "OU" 145. La seconde entrée 146 de la seconde porte "ou" 145 constitue la sortie d'une troisième porte "et" 147. Cette porte "et" a trois entrées 148, 149, 150. la première entrée 148 est positive si l'avion est au sol. La seconde entrée 149 est positive si la commande d'allumage du moteur est positive. La troisième entrée 150 est positive si la vitesse de rotation est supérieure au seuil à partir duquel du carburant peut être distribué aux injecteurs.

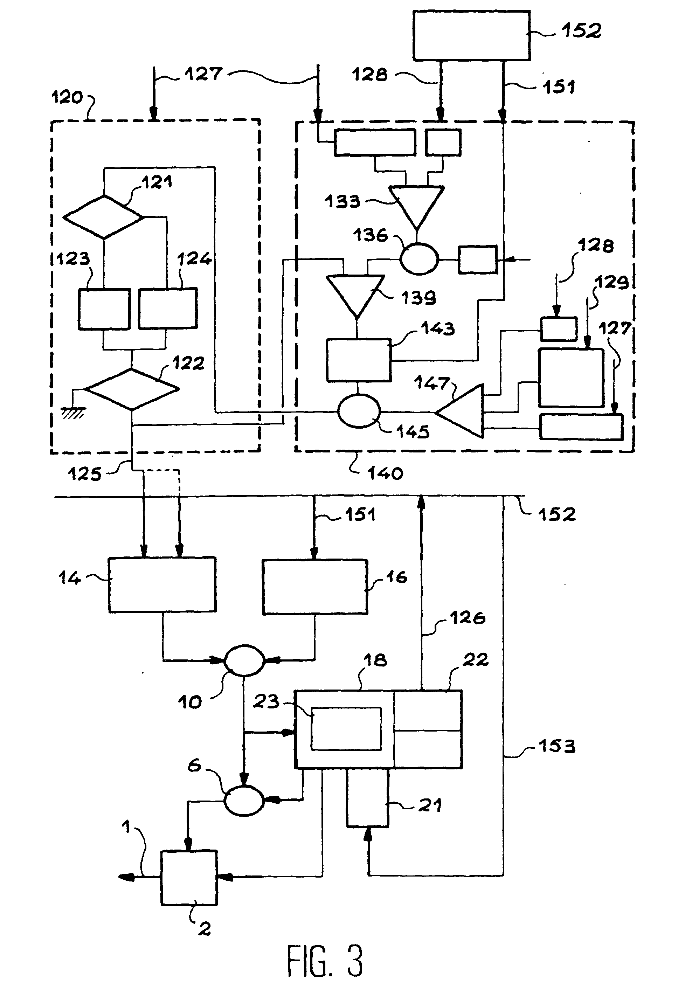

Avant de décrire le fonctionnement global des modules logiques 120, 140 et de l'unité de contrôle carburant 100, en liaison avec la figure 3 où ces trois éléments sont représentés, il est rappelé que :
la fermeture du clapet 2 est obtenue :
   - soit par l'ouverture de l'électro-robinet stop 16
   - soit par l'ouverture de l'électro-robinet de survitesse 14
   - soit par le doseur 18 en position de butée mini appelé signal butée.

Les électro-robinets 14, 16 sont de type monostable sans auto-maintien.

L'ouverture de l'un des deux électro-robinets 14, 16 provoque une fermeture du doseur 18 en butée mini quelle que soit la commande du calculateur commandée par la servovalve 21.

L'information de l'état du clapet 2 stop (ouvert/fermé) est obtenue par la position du doseur 18 captée par les capteurs de position 22. Doseur 18 en butée mini signifie clapet 2 fermé, doseur 18 non en butée mini signifie clapet 2 ouvert.

Le fonctionnement de l'invention, telle que décrite ci-dessus, dans des phases de coupure en stop ou en cas de survitesse ou lors du test de ces phases, sera maintenant abordé.

Les quatre séquences de fonctionnement fondamentales relativement à l'invention sont :
- séquence de démarrage au sol avec test de la chaîne de survitesse,
- séquence d'arrêt avec test de la chaîne de coupure en stop,
- séquence d'arrêt en vol sur erreur pilote puis rallumage sans test,
- séquence d'arrêt en vol sur déclenchement de la protection de survitesse puis rallumage sans test sur demande du pilote.

Le test de bon fonctionnement de la chaîne de protection survitesse n'est fait que lors d'un démarrage au sol et pas lors d'un rallumage en vol. Cela est nécessaire pour ne pas diminuer les capacités de rallumage en vol du turboréacteur.

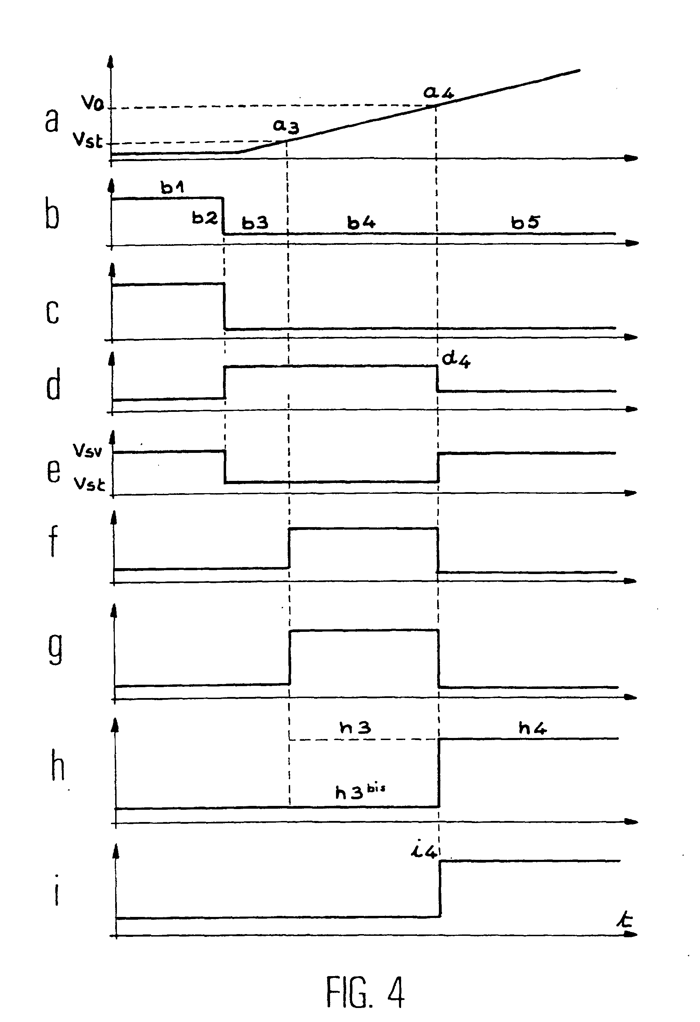

Le fonctionnement lors de chacune de ces séquences sera explicité en liaison avec la figure 3 et avec chacun des diagrammes temporels des figures 4, 5, 6 et 7 respectivement.

Chacun de ces diagrammes représente :
- sur une ligne a, l'évolution de la vitesse de rotation du moteur ; en ce qui concerne le fonctionnement de l'invention qui va être effectué dans ces différentes phases, les valeurs de vitesse qui sont prises en considération sont par ordre croissant :
   V_{**min**} vitesse minimum pour autoriser l'allumage en vol,
   V_{**st**} vitesse seuil de survitesse en test,
   V_{**a**} vitesse minimum pour l'autorisation d'allumage au sol,
   V_{**r**} vitesse de ralenti ,
   V_{**n**} vitesse en vol de croisière,
   V_{**sv**} vitesse seuil de survitesse réelle ;

De façon connue, ces valeurs de vitesses sont stockées en mémoire ou importées par le bus 152.
- sur une ligne b, la commande de vol en provenance du levier maître actionné par le pilote. Il convient de noter que dans l'exemple décrit, une position d'allumage se traduit par un signal électrique éteint représenté par une position basse ;
- sur une ligne c, la position de l'électro-robinet 16 de fermeture en stop, la valeur est haute si le robinet est ouvert, basse s'il est fermé ;
- sur une ligne d, la valeur de la variable test (1 ou 0) ;
- sur une ligne e, la valeur du seuil de détection survitesse (seuil réel ou seuil de test) ;
- sur des lignes f et g, la valeur du signal de commande de l'électro-robinet 14 de fermeture en survitesse et la position dudit électro-robinet 14, respectivement, la valeur est haute si le robinet est ouvert, basse s'il est fermé ;
- sur une ligne h, la position du doseur 18, cette position variant entre une position commandée par le calculateur de vol et obtenue au moyen de la servovalve 21 et une position en butée mini commandée par les modules 120 et 140 et obtenue au moyen des électro-robinets 14 et 16 ;
- sur une ligne i, la position du clapet stop 2 (ouvert ou fermé).

La séquence de démarrage au sol avec test de la chaîne d'arrêt en survitesse sera maintenant commentée en liaison avec la figure 3 et le diagramme temporel constituant la figure 4.

En ligne b, pendant un premier intervalle b1, le moteur est au repos et le levier maître est en position non allumée, ce qui comme signalé plus haut se traduit par un signal électrique haut.

A l'instant b2, le pilote bascule le levier maître. Le moteur va commencer à tourner. A l'instant a3 marqué par une ligne verticale pointillée sur les diagrammes des lignes a à h, le moteur atteint la vitesse seuil test V_{**st**} qui a été fixée pour le test de survitesse.

A l'instant a4, marqué par une seconde ligne verticale pointillée sur les diagrammes des lignes a à i, le moteur atteint la vitesse V_{**a**} où l'on peut au sol envoyer du carburant dans les injecteurs

Il va être examiné maintenant, comment la structure représentée figure 3 se comporte à ces différents instants.

A l'instant b2, le changement d'état du levier maître se traduit à l'intérieur de l'unité logique 140 par une commande 151 qui va initialiser le commutateur d'état 143 dans une position de test, par exemple à l'état 1 (ligne d). Cette même commande 151 va agir sur l'électro-robinet 16 de fermeture en stop pour le basculer d'une position initiale ouverte à une position fermée (ligne c). La survitesse limite est basculée à la vitesse test V_{**st**} (ligne e). Le commutateur 143 ayant la valeur 1 la comparaison se fait dans le module 123. Ces différentes actions sont matérialisées sur les lignes d, c et e respectivement.

Lorsque à l'instant a3 le moteur atteint la vitesse seuil V_{**st**} de survitesse test le signal en sortie du module 122 bascule (ligne f) et passe par exemple à 1. L'électro-robinet 14 de protection survitesse qui au départ est fermé (ligne g) reçoit une commande d'ouverture et s'ouvre (ligne g). Cela ne change pas la position du clapet stop 2, par l'intermédiaire des portes "ou" 10 et 6 car celui-ci était fermé. Il reste donc fermé.

Le constat du fonctionnement correct de la chaîne de protection survitesse est effectué en observant ce qui se passe au niveau de la position du boisseau 23 du doseur 18 représenté ligne h.

Le doseur 18 reçoit du calculateur au moment où le moteur atteint la vitesse de survitesse test, une position de consigne correspondant à la position d'allumage. Cette position est représentée en h3 par une ligne pointillée horizontale.

L'ouverture de l'électro-robinet de protection survitesse 14 va, par l'intermédiaire de la porte "ou" 10 et de l'entrée 20 du doseur, placer le boisseau 23 de façon prioritaire par rapport à l'ordre du calculateur en position de butée minimum, position qui entraîne par l'intermédiaire de la sortie 19 du doseur 18 et de la porte "ou" 6, la fermeture du clapet stop 2. Ainsi, si la position détectée par les capteurs de position 22 est la position de consigne envoyée par le calculateur représentée par la ligne pointillée horizontale h3, on saura que quelque chose ne fonctionne pas dans la chaîne d'arrêt en survitesse et le pilote en sera informé. Si la chaîne de protection de survitesse fonctionne alors les capteurs de position 22 enregistrent la position h3bis, position de butée mini.

Lorsque la vitesse de rotation du moteur atteint la vitesse d'allumage V_{**a**}, l'avion étant toujours au sol, les entrées 148 (avion au sol) 149 (levier maître en position d'allumage) et 150 (vitesse moteur supérieure à la vitesse d'allumage) sont toutes positives et en conséquence, la sortie 146 de la porte "et" 147 est positive. La valeur du commutateur d'état 143 est ramenée à O ligne d, phase d4. Dans le module 121, la valeur test n'est plus égale à 1, en conséquence, on se trouve sur la ligne de sortie correspondant à la réponse non du module 121. La comparaison de survitesse s'effectue avec la vitesse réelle de survitesse et non plus la vitesse test (ligne e). La sortie du module 122 n'est plus positive et, en conséquence, le signal de commande de l'électro-robinet de survitesse 14 est ramené à O, ligne f et l'électro-robinet 14 se ferme (ligne g).

Les robinets 14 et 16 étant fermés, la position du boisseau 23 du doseur 18 revient à la position de consigne délivrée par le calculateur en h4 ligne h. Le boisseau 23 n'étant plus en butée mini, la pression en sortie 17 du doseur 18 est suffisante pour ouvrir le clapet 2,i4 ligne i. Le clapet étant ouvert du carburant arrive aux injecteurs.

Ainsi on voit qu'avec l'architecture adoptée, toute phase de démarrage au sol comporte le test de la chaîne de protection survitesse.

Il convient de noter que pendant ce test et notamment durant les phases h3, h3bis une fonction de surveillance de la panne asservissement doseur doit être inhibée. C'est l'écart entre la consigne calculateur et la position réelle doseur donnée par les capteurs 22 qui permet de vérifier la chaîne de protection en survitesse.

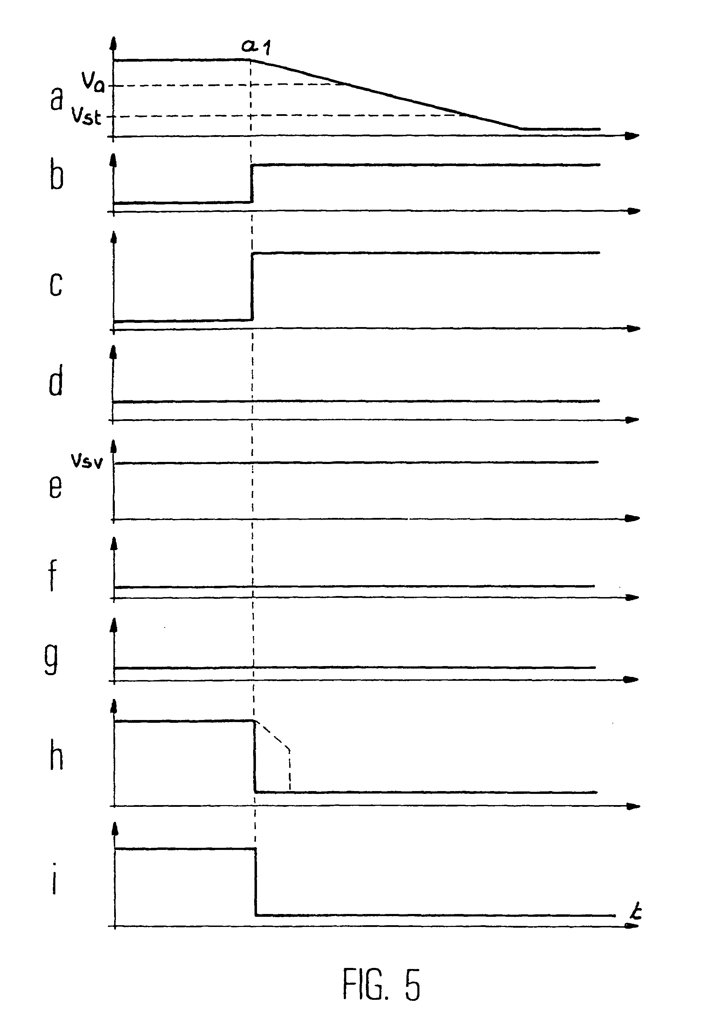

Le fonctionnement du dispositif représenté figure 3 au cours d'une séquence d'arrêt d'un moteur, au sol avec test de la coupure en stop sera maintenant commenté en liaison avec la figure 5.

En ligne a, le moteur tournant au régime de ralenti V_{**r**}, le pilote bascule le levier maître vers la position d'extinction des moteurs à un instant a1 marqué par une ligne pointillée descendante sur la figure 5.

En ligne b, au même instant le signal électrique avion passe de la position basse à la position haute.

En ligne c, l'électro-robinet de coupure en stop 16 reçoit la commande d'ouverture 151 et s'ouvre.

La valeur du commutateur d'état 143 ligne d, ne change pas et reste à 0, car la sortie 146 de la porte "et" 147 passe de la valeur 1 à 0, sans revenir à la valeur 1. Il y a toujours une entrée de la porte "et" 147 qui n'est pas positive après le basculement du levier maître dans la position "éteint". Au ralenti, la vitesse de rotation V_{**r**} est supérieure à la vitesse minimum V_{**a**} pour autoriser l'arrivée du carburant aux injecteurs. Lorsqu'elle devient inférieure, le levier maître est sur la position éteinte. Il n'y a pas non plus de changement d'état au niveau de la porte "et" 133.

En conséquence, le seuil de survitesse, ligne e, reste à sa valeur réelle. Le signal de commande de l'électro-robinet de survitesse 14, ligne f, et donc la position de l'électro-robinet, ligne g, ne changent pas.

Par contre, du fait de l'ouverture du robinet de fermeture en stop 16, ligne c, le doseur 18, reçoit une consigne prioritaire de déplacement du boisseau 23 en position de butée mini. Ce déplacement capté par les capteurs 22 est représenté en trait plein ligne h. Il est différent du déplacement qui aurait été effectué, si la position du boisseau 23 avait suivi la consigne donnée par le calculateur du moteur. Cette position de consigne, correspondant à une diminution progressive du débit de carburant suivant la diminution de la vitesse de rotation du moteur, est représentée en pointillés ligne h.

C'est l'écart entre ces deux positions du boisseau 23 du doseur 18 qui permet de vérifier le bon fonctionnement de la chaîne de coupure en stop.

Enfin, en ligne i, le clapet stop se ferme à l'instant a1 en raison de la commande reçue par la sortie 17 du doseur 18.

Ainsi, on voit que le test de la coupure en stop est effectué à chaque arrêt moteur au sol, et que le test de survitesse est effectué à chaque démarrage au sol. Il n'est plus nécessaire d'effectuer une opération de maintenance particulière pour effectuer les deux tests.

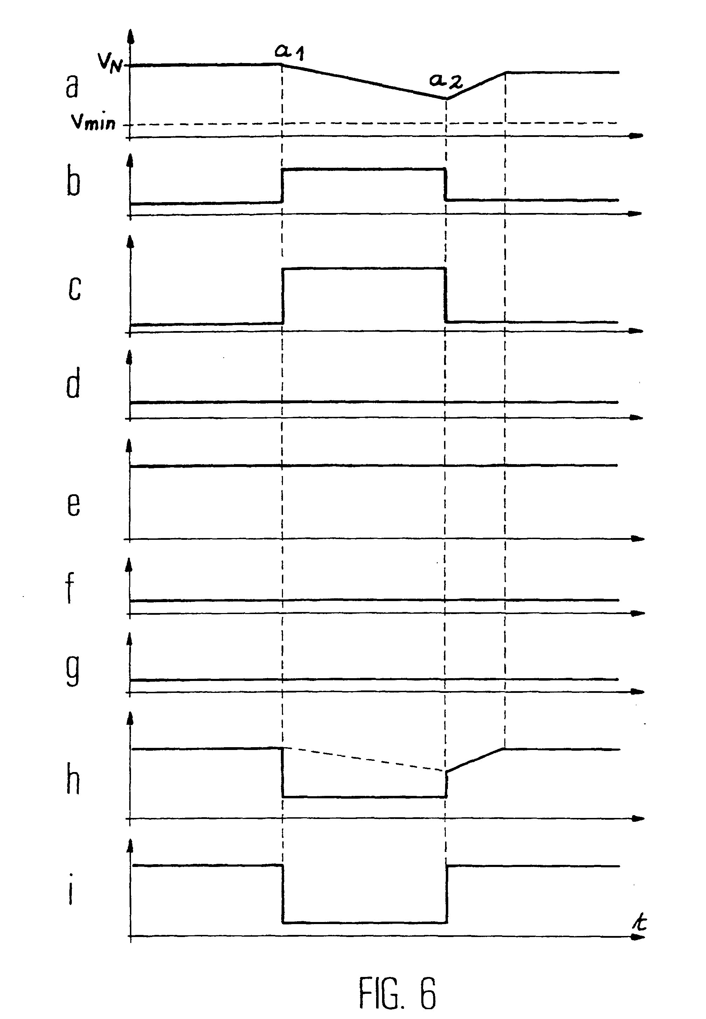

Le fonctionnement du dispositif représenté figure 3 sera maintenant commenté lors d'une séquence d'arrêt en vol sur erreur du pilote puis de rallumage sans test. Le diagramme temporel de cette séquence est représenté figure 6.

En ligne a, le moteur tourne en début de séquence à la vitesse de rotation de croisière V_{**n**}. A l'instant a1, par exemple, par suite d'une erreur, le pilote coupe le moteur. La vitesse de rotation du moteur diminue jusqu'à un instant a2 auquel le pilote décide de rallumer le moteur.

En ligne b, le signal électrique avion passe de la position éteinte avant l'instant a1, à la position allumée après l'instant a1 puis de nouveau à la position éteinte après l'instant a2.

En ligne c, la position de l'électro-robinet 16 de coupure en stop passe sous l'effet des commandes successives reçues en a1 et a2, à l'instant a1 de la position fermée à la position ouverte puis à l'instant a2 à la position fermée.

Comme dans la séquence précédente et pour les mêmes raisons, il n'y a pas de variation du commutateur d'état, ligne d, du seuil de détection survitesse, ligne e du signal de commande et de la position de l'électro-robinet 14 de coupure en survitesse, lignes f et g.

A partir de l'instant a1, la position du boisseau 23 n'est plus commandée par la servovalve 21, car du fait de l'ouverture de l'électro-robinet 16 de coupure en stop, le boisseau 23 est envoyé en position de butée mini, ce qui a pour effet de fermer le clapet stop 2, ligne i. La position qu'aurait le boisseau 23 du doseur 18, ligne h, en réponse aux consignes du calculateur est représentée en pointillés ; c'est une fonction du régime de rotation réelle du moteur. A l'instant a2, du fait de la fermeture de l'électro-robinet 16 de coupure en stop, ligne c, la servovalve 21 reprend le contrôle de la position du boisseau 23 du doseur 18, ce qui a pour effet d'ouvrir le clapet stop 2, ligne i.

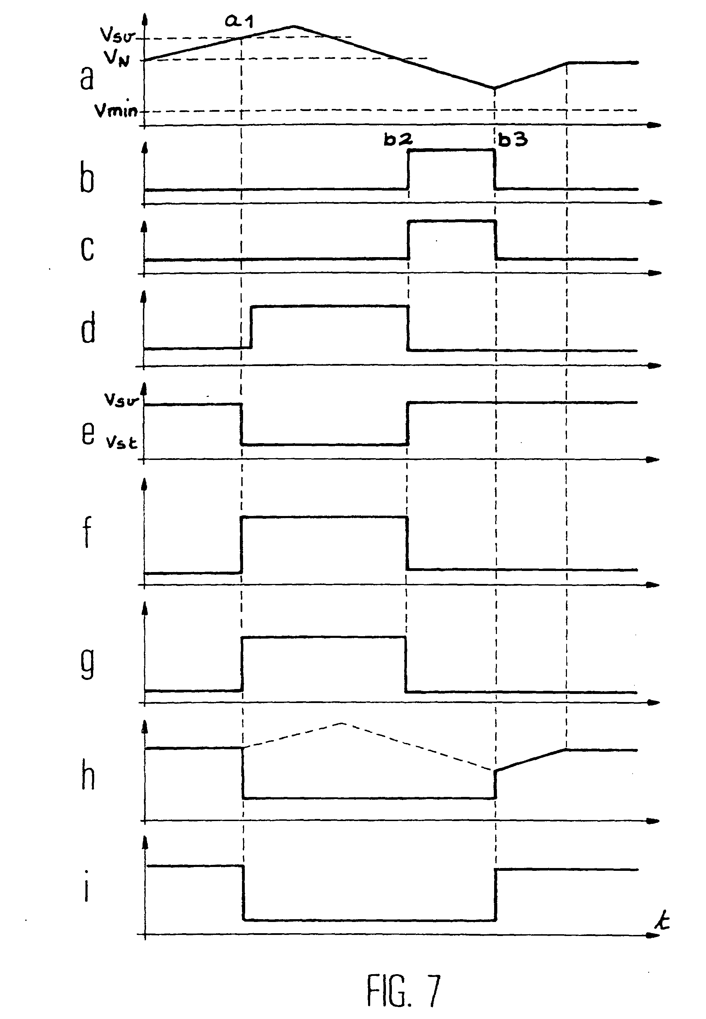

Le fonctionnement d'une séquence d'arrêt du moteur en vol sur déclenchement de la protection de survitesse puis rallumage sans test sur demande du pilote va maintenant être commenté en liaison avec la figure 7.

On suppose tout d'abord que pour une raison quelconque, la vitesse de rotation atteint le seuil de survitesse a un instant a1, ligne a. Dans le module 120, la réponse à la question N2 > seuil du module de comparaison 122 devient positive, une commande 125 d'ouverture est dirigée vers l'électro-robinet 14 de survitesse et celui-ci passe de la position fermée à la position ouverte lignes f et g, le boisseau 23 du doseur 18 ligne h, est portée en position de butée mini et par conséquence, le clapet stop 2, ligne i, passe de la position ouverte à la position fermée. La position qu'aurait le boisseau 23 du doseur 18, ligne h, en réponse aux consignes du calculateur est représentée en pointillés ; c'est une fonction du régime de rotation réelle du moteur. Le moteur n'est plus alimenté en carburant et en conséquence, la vitesse de rotation diminue après passage par un maximum, ligne a.

Le fait que la réponse à la question "N2 > seuil" dans le module 122 soit positive, envoie également un signal positif vers l'entrée 141 de la porte "et" 139. L'avion étant en vol, un signal positif est également reçu sur la seconde entrée 138, par l'intermédiaire de la porte "ou" 136 et de son entrée 137. Il s'ensuit que le commutateur d'état, ligne d, passe à l'instant a1 de l'état 0 à l'état 1. De ce fait, le seuil de détection survitesse est ramené de sa valeur survitesse réelle à sa valeur survitesse test. De ce fait, même quand la vitesse de rotation du moteur redescend du fait de la fermeture de l'arrivée de carburant à une vitesse inférieure au seuil de survitesse, le moteur ne se rallume pas.

Le rallumage du moteur exige une double action du pilote. D'une part, il doit couper le moteur en basculant le levier maître, et d'autre part, il doit commander l'allumage du moteur en basculant à nouveau le levier maître.

On va supposer que ces deux actions sont accomplies aux instants b2 et b3 respectivement, ligne b.

Le mémento pilote précise que le rallumage en vol du moteur n'est autorisé que si la vitesse de rotation est supérieure à un seuil V_{**min**}. Ce seuil est la vitesse à partir de laquelle, en vol, du carburant peut alimenter les injecteurs.

Cette vitesse seuil se situe autour de 6 % de la vitesse de rotation plein gaz autorisée pour les conditions en cours, du vol.

A l'instant b2, la coupure du moteur se traduit par le signal électrique avion passant de la position éteinte à la position allumée, ligne c. Il en résulte que l'électro-robinet 16 de fermeture en stop reçoit une commande 151 d'ouverture et s'ouvre (ligne c). Le commutateur d'état 143, au reçu de cette commande 151, est réinitialisé et passe de la position 1 à la position 0 (ligne d). Il en résulte que le seuil de comparaison de la survitesse, module 121, revient à la vitesse réelle de survitesse, ligne e. La vitesse de rotation devenant de ce fait inférieure au seuil, la sortie du module 122 devient négative et l'électro-robinet 14 de survitesse reçoit un signal de fermeture, ligne f, et passe en position fermée, ligne g. Il n'en résulte aucun changement pour la position du boisseau 23 du doseur 18 qui reste en position de butée minimum, ligne h, car l'électro-robinet 16 de fermeture en stop est ouvert. Il en est donc de même pour la position du clapet stop 2 qui reste fermé, ligne i.

Le basculement du levier maître a donc eu pour effet de réinitialiser la position des éléments matériels 14, 16, 18, 2 du système pour les mettre dans une position de fermeture normale du moteur, de même pour les éléments logiques 121, 123, 124 et 143.

A l'instant b3, le pilote bascule à nouveau la position du levier maître. Il en résulte que le signal électrique avion, ligne b, passe de allumé à éteint. La commande 151 reçue par l'électro-robinet 16 de fermeture en stop provoque la fermeture de ce robinet, ligne c.

Le commutateur d'état 143, ligne d, ne change pas de position car la porte "et" 139 ne reçoit pas deux entrées positives. La première 138 est positive, car l'avion étant en vol, cette information est transmise par la porte "ou" 136, qui reçoit cette information sur son entrée 137. Par contre, la seconde entrée 141 reçue du module 122 est négative car la vitesse de rotation du moteur est inférieure à la vitesse seuil.

De ce fait, le seuil de détection survitesse, ligne e, ne change pas et reste fixé à la survitesse réelle (ligne e). Le signal de commande de l'électro-robinet 14 de survitesse ne change pas, ligne f, ni la position de cet électro-robinet, ligne g, qui reste fermé.

Les robinets 14 et 16 étant maintenant fermés, le boisseau 23 du doseur 18 quitte la position de butée mini et rejoint une position de consigne commandée par les servovalves 21, ligne h. Il en résulte l'ouverture du clapet stop 2, ligne 1, et l'allumage du carburant au niveau des injecteurs, ligne i. La vitesse de rotation moteur repart vers son niveau normal, ligne a.

En résumé le module 140 gère de façon redondante le commutateur d'état pour le placer dans son état test si :
- l'avion est au sol et la commande d'allumage est mise en position allumage ;
- l'avion est en vol et le seuil de survitesse réelle est dépassé, le module 140 plaçant le commutateur d'état dans son état normal si ;
- l'avion étant au sol et la commande d'allumage étant en position allumage, la vitesse de rotation du moteur devient supérieure à une vitesse V_{**a**} à partir de laquelle du carburant peut être envoyé aux injecteurs, cette vitesse V_{**a**} étant supérieure au seuil de survitesse en test V_{**st**}, ou si l'avion étant en vol et le commutateur d'état étant dans l'état de test par suite d'une survitesse, la commande 151 d'allumage est commutée d'une position d'allumage à une position d'extinction.

On remarque aussi que dans les cas de test, le bon fonctionnement est testé par l'écart entre une position calculée du boisseau 23 du doseur 18, et une position réelle en position de butée mini captée par les capteurs 22. Cet écart est traité de façon en elle même à la portée de l'homme du métier pour être visualisée ou traitée au niveau d'un calculateur de l'avion ou du moteur. Ce mode de caractérisation du bon fonctionnement correspond au désir de modifier un minimum les matériels existants pour arriver au résultat souhaité. Les capteurs de position 22 existent et la position calculée du boisseau 23 du doseur 18 existe également. On notera cependant que le même résultat pourrait être obtenu par un signal en provenance directe du clapet 2 Ce signal indiquant la fermeture ou l'ouverture du clapet.

## Revendications

1. Méthode de commande et de test d'une chaîne de coupure en stop d'un moteur d'avion, le moteur comportant des moyens pour délivrer un signal de commande (153) de débit autorisé de carburant alimentant des injecteurs du moteur, ce signal de commande (153) étant reçu par des moyens (21) de commande d'un doseur (18) de carburant, ces moyens (21) de commande réglant le doseur (18) pour qu'il débite le débit autorisé, un capteur (22) de détermination de la valeur du débit réel instantané alimentant les injecteurs du moteur, la coupure en stop étant commandée par la position (151) d'un levier maître, une position (151) de coupure du levier maître constituant une commande (151) pour actionner des moyens (16, 2) de coupure de l'arrivée du carburant arrivant aux injecteurs du moteur, cette commande (151) pour actionner les moyens (16, 2) de coupure du carburant ayant priorité sur la commande du débit autorisé, dispositif **caractérisée en ce que** le test de bon fonctionnement de la chaîne de coupure en stop est constitué par la détection d'un écart entre la valeur de débit autorisé de carburant et le débit réel de carburant mesuré par le capteur (22) de la valeur du débit instantané réel.

2. Méthode de protection d'un moteur d'avion en survitesse, le moteur comportant des moyens pour délivrer un signal (153) de commande d'un débit autorisé de carburant alimentant des injecteurs du moteur, ce signal (153) de commande d'un débit autorisé de carburant étant reçu par des moyens (21) de commande d'un doseur (18) de carburant, ces moyens (21) de commande réglant le doseur (18) pour qu'il débite le débit autorisé, un capteur (22) de détermination de la valeur du débit réel instantané alimentant les injecteurs du moteur, des moyens (120, 122, 124) de détection d'une survitesse réelle du moteur, des moyens (120, 122, 123) de détection d'une survitesse de test du moteur, ces moyens (120, 122, 123, 124) de détection de survitesse délivrant une commande (125) pour actionner des moyens (2, 14) de coupure du débit de carburant dirigé vers les injecteurs, cette commande (125) pour actionner les moyens (2, 14) de coupure du carburant ayant priorité sur la commande du débit autorisé, dispositif **caractérisé en ce que** la détection de survitesse réelle ou en test est effectuée dans un module (120) électronique logique de détection de survitesse recevant une grandeur (127) représentant la valeur de la vitesse de rotation instantanée réelle du moteur, ce module (120) comportant un commutateur (121, 143) d'état capable d'au moins deux états, un état de test et un état normal, ce module (120) effectuant une comparaison de la vitesse de rotation réelle au seuil de survitesse en test, lorsque le commutateur d'état est dans l'état de test, et au seuil de survitesse réelle, lorsque le commutateur d'état est dans l'état normal, ce module délivrant une commande (125) de fermeture en direction des moyens (2, 14) de coupure de l'arrivée du carburant et **en ce que** le test du bon fonctionnement de l'arrêt en survitesse du moteur est constitué par la détection d'un écart entre le débit de carburant autorisé et le débit réel de carburant mesuré par le capteur (22) de la valeur réelle du débit instantané de carburant.

3. Méthode de commande et de test d'une chaîne d'arrêt en stop et de protection en survitesse d'un moteur d'avion, le moteur comportant des moyens pour délivrer un signal (153) de commande d'un débit autorisé de carburant alimentant des injecteurs du moteur, ce signal (153) de commande d'un débit autorisé de carburant étant reçu par des moyens (21) de commande d'un doseur (18) de carburant, ces moyens (21) de commande réglant le doseur (18) pour qu'il débite le débit autorisé, un capteur (22) de détermination de la valeur du débit réel instantané alimentant les injecteurs du moteur, des moyens (120, 122, 124) de détection d'une survitesse réelle du moteur, des moyens (120, 122, 123) de détection d'une survitesse de test du moteur, ces moyens (120, 122, 123, 124) de détection de survitesse délivrant une commande (125) pour actionner des moyens (2, 14) de coupure du débit de carburant dirigé vers les injecteurs, cette commande (125) pour actionner les moyens (2, 14) de coupure du carburant ayant priorité sur la commande du débit autorisé des moyens de régulation du débit de carburant alimentant des injecteurs du moteur, la coupure en stop étant commandée par la position (151) d'un levier maître, une position (151) de coupure du levier maître constituant une commande (151) pour actionner des moyens (16, 2) de coupure de l'arrivée du carburant arrivant aux injecteurs du moteur, cette commande (151) pour actionner les moyens (16, 2) de coupure du carburant ayant priorité sur la commande du débit autorisé, dispositif **caractérisé en ce que** la détection de survitesse réelle ou en test est effectuée dans un module (120) électronique logique recevant une grandeur (127) représentant la valeur de la vitesse de rotation instantanée réelle du moteur, ce module (120) comportant un commutateur (121, 143) d'état capable d'au moins deux états, un état de test et un état normal, ce module (120) effectuant une comparaison de la vitesse de rotation réelle au seuil de survitesse en test, lorsque le commutateur d'état est dans l'état de test, et au seuil de survitesse réelle, lorsque le commutateur d'état est dans l'état normal, ce module délivrant une commande (125) de fermeture en direction des moyens (2, 14) de coupure de l'arrivée du carburant et **en ce que** le test du bon fonctionnement de l'arrêt en survitesse du moteur est constitué par la détection d'un écart entre le débit de carburant autorisé et le débit réel de carburant mesuré par le capteur (22) de la valeur réelle du débit instantané de carburant et **en ce que** le test de bon fonctionnement de la chaîne de coupure en stop est constitué par la détection d'un écart entre le débit autorisé de carburant et le débit réel de carburant mesuré par le capteur (22) de la valeur du débit instantané réel.

4. Méthode selon l'une des revendications 1 ou 3, **caractérisée en ce que** les moyens de commande de coupure en stop de l'arrivée du carburant comprennent un électro-robinet (16) de fermeture en stop et un clapet (2), l'ouverture du robinet étant provoquée par la commande (151) de fermeture en stop, l'ouverture du robinet (16) libérant une pression de fermeture du clapet.

5. Méthode selon l'une des revendications 2 ou 3, **caractérisée en ce que** les moyens de coupure de l'arrivée du carburant en cas de survitesse, comprennent un électro-robinet (14) de fermeture en survitesse et un clapet (2), l'ouverture du robinet étant déclenchée en cas de survitesse par la commande (125) reçue du module électronique (120) de détection de survitesse, l'ouverture du robinet (14) libérant une pression de fermeture du clapet (2).

6. Méthode selon l'une des revendications 2 ou 5, **caractérisé en ce que** l'état du commutateur d'état est géré par un module logique (140) de gestion du commutateur d'état, ce module recevant une information (127) relative à la vitesse de rotation du moteur, une information (128) relative à la phase de vol, une information sur la position de la commande (151) d'allumage moteur et recevant ou ayant en mémoire différentes valeurs de seuil de vitesse, ce module (140) logique de gestion plaçant le commutateur dans son état test si :
- l'avion est au sol et la commande d'allumage est mise en position allumage ;
- l'avion est en vol et le seuil de survitesse réelle est dépassé, ce module (140) plaçant le commutateur d'état dans son état normal si :
- l'avion étant au sol et la commande d'allumage étant en position allumage, la vitesse de rotation du moteur devient supérieure à une vitesse V_{**a**} à partir de laquelle du carburant peut être envoyé aux injecteurs, cette vitesse V_{**a**} étant supérieure au seuil de survitesse en test V_{**st**}, ou si l'avion étant en vol et le commutateur d'état étant dans l'état de test par suite d'une survitesse, la commande (151) d'allumage est commutée d'une position d'allumage à une position d'extinction.

## Patentansprüche

1. Verfahren zur Steuerung und zum Test eines Notausschaltkreises eines Flugzeugtriebwerks, wobei das Triebwerk Mittel enthält, um ein Steuersignal (153) für die freigegebene Brennstoffmenge, die Einspritzdüsen des Triebwerks zugeführt wird, abzugeben, wobei dieses Steuersignal (153) von Steuermitteln (21) für eine Brennstoffdosiereinrichtung (18) empfangen wird, wobei diese Steuermittel (21) die Dosiereinrichtung (18) so regeln, dass sie die freigegebene Brennstoffmenge abgibt, wobei das Triebwerk ferner einen Messfühler (22) zur Bestimmung des Werts der aktuellen Ist-Menge enthält, die den Einspritzdüsen des Triebwerks zugeführt wird, wobei die Notausschaltung durch die Stellung (151) eines Primärhebels gesteuert wird, wobei eine Notausschalt-Stellung (151) des Primärhebels einen Steuerbefehl (151) darstellt, durch den Mittel (16, 2) zum Unterbrechen der Brennstoffzufuhr zu den Einspritzdüsen des Triebwerks betätigt werden, wobei dieser Steuerbefehl (151) zur Betätigung der Mittel (16, 2) zum Unterbrechen der Brennstoffzufuhr Vorrang vor der Steuerung der freigegebenen Brennstoffmenge hat,
**dadurch gekennzeichnet,**
**dass** der Test des Notausschaltkreises auf einwandfreies Funktionieren in der Erkennung einer Abweichung zwischen dem Wert der freigegebenen Brennstoffmenge und der aktuellen Ist-Brennstoffmenge, die von dem Messfühler (22) für den Wert der aktuellen Ist-Menge gemessen wurde, besteht.

2. Verfahren für den Überdrehzahlschutz eines Flugzeugtriebwerks, wobei das Triebwerk Mittel enthält, um ein Steuersignal (153) für eine freigegebene Brennstoffmenge, die Einspritzdüsen des Triebwerks zugeführt wird, abzugeben, wobei dieses Steuersignal (153) für eine freigegebene Brennstoffmenge von Steuermitteln (21) für eine Brennstoffdosiereinrichtung (18) empfangen wird, wobei diese Steuermittel (21) die Dosiereinrichtung (18) so steuern, dass sie die freigegebene Brennstoffmenge abgibt, wobei das Triebwerk ferner einen Messfühler (22) zur Bestimmung des Werts der aktuellen Ist-Menge enthält, die den Einspritzdüsen des Triebwerks zugeführt wird, sowie Mittel (120, 122, 124) zur Erkennung einer realen Überdrehzahl des Triebwerks enthält, sowie Mittel (120, 122, 123) zur Erkennung einer Test-Überdrehzahl des Triebwerks enthält, wobei diese Mittel (120, 122, 123, 124) zur Erkennung einer Überdrehzahl ein Steuersignal (125) abgeben, um Mittel (2,14) zum Unterbrechen der Brennstoffzufuhr zu den Einspritzdüsen zu betätigen, wobei dieser Steuerbefehl (125) zur Betätigung der Mittel (2,14) zum Unterbrechen der Brennstoffzufuhr Vorrang vor der Steuerung der freigegebenen Brennstoffmenge durch die Mittel zur Regelung der Brennstoffmenge hat,
**dadurch gekennzeichnet,**
**dass** die Erkennung der realen oder der Test-Überdrehzahl in einem logischen elektronischen Modul (120) erfolgt, das eine Größe (127) empfängt, die den Wert der aktuellen realen Drehzahl des Triebwerks darstellt, wobei dieses Modul (120) einen Zustandsumschalter (121, 143) enthält, der wenigstens zwei Zustände schalten kann, einen Testzustand und einen Normalzustand, wobei dieses Modul (120) einen Vergleich zwischen der realen Drehzahl und dem Schwellenwert der Test-Überdrehzahl durchführt, wenn sich der Zustandsumschalter im Testzustand befindet, und zwischen der realen Drehzahl und dem Schwellenwert der realen Überdrehzahl, wenn sich der Zustandsumschalter im Normalzustand befindet, wobei dieses Modul einen Schließ-Steuerbefehl (125) zu den Mitteln (2,14) zum Unterbrechen der Brennstoffzufuhr sendet, und dadurch, dass der Test auf einwandfreies Funktionieren des Ausschaltens bei Überdrehzahl des Triebwerks in der Erkennung einer Abweichung zwischen dem Wert der freigegebenen Brennstoffmenge und der aktuellen Ist-Brennstoffmenge, die von dem Messfühler (22) für den Wert der aktuellen Ist-Menge gemessen wurde, besteht.

3. Verfahren zur Steuerung und zum Test eines Notausschalt- und Überdrehzahlschutz-Kreises eines Flugzeugtriebwerks, wobei das Triebwerk Mittel enthalt, um ein Steuersignal (153) für eine freigegebene Brennstoffmenge, die Einspritzdüsen des Triebwerks zugeführt wird, abzugeben, wobei dieses Steuersignal (153) für eine freigegebene Brennstoffmenge von Steuermitteln (21) für eine Brennstoffdosiereinrichtung (18) empfangen wird, wobei diese Steuermittel (21) die Dosiereinrichtung (18) so regeln, dass sie die freigegebene Brennstoffmenge abgibt, wobei das Triebwerk ferner einen Messfühler (22) zur Bestimmung des Werts der aktuellen Ist-Menge enthält, die den Einspritzdüsen des Triebwerks zugefürt wird, sowie Mittel (120, 122, 124) zur Erkennung einer realen Überdrehzahl des Triebwerks, sowie Mittel (120, 122, 123) zur Erkennung einer Test-Überdrehzahl des Triebwerks, wobei diese Mittel (120, 122, 123, 124) zur Erkennung einer Überdrehzahl ein Steuersignal (125) abgeben, um Mittel (2,14) zum Unterbrechen der Brennstoffzufuhr zu den Einspritzdüsen zu betätigen, wobei dieser Steuerbefehl (125) zur Betätigung der Mittel (2,14) zum Unterbrechen der Brennstoffzufuhr Vorrang vor der Steuerung der freigegebenen Brennstoffmenge durch die Mittel zur Regelung der Brennstoffmenge hat, die den Einspritzdüsen des Triebwerks zugeführt wird, wobei die Notausschaltung durch die Stellung (151) eines Primärhebels gesteuert wird, wobei eine Notausschalt-Stellung (151) des Primärhebels einen Steuerbefehl (151) darstellt, durch den Mittel (16,2) zum Unterbrechen der Brennstoffzufuhr zu den Einspritzdüsen des Triebwerks betätigt werden, wobei dieser Steuerbefehl (151) zur Betätigung der Mittel (16,2) zum Unterbrechen der Brennstoffzufuhr Vorrang vor der Steuerung der freigegebenen Brennstoffmenge hat,
**dadurch gekennzeichnet,**
**dass** die Erkennung der realen oder der Test-Überdrehzahl in einem logischen elektronischen Modul (120) erfolgt, des eine Größe (127) empfängt, die den Wert der aktuellen realen Drehzahl des Triebwerks darstellt, wobei dieses Modul (120) einen Zustandsumschalter (121, 143) enthält, der wenigstens zwei Zustände schalten kann, einen Testzustand und einen Normalzustand, wobei dieses Modul (120) einen Vergleich zwischen der realen Drehzahl und dem Schwellenwert der Test-Überdrehzahl durchführt, wenn sich der Zustandsumschalter im Testzustand befindet, und zwischen der realen Drehzahl und dem Schwellenwert der realen Überdrehzahl, wenn sich der Zustandsumschalter im Normalzustand befindet, wobei dieses Modul einen Schließ-Steuerbefehl (125) zu den Mitteln (2,14) zum Unterbrechen der Brennstoffzufuhr sendet, und dadurch, dass der Test auf einwandfreies Funktionieren des Ausschaltens bei Überdrehzahl des Triebwerks in der Erkennung einer Abweichung zwischen dem Wert der freigegebenen Brennstoffnenge und der aktuellen Ist-Brennstoffmenge, die von dem Messfühler (22) für den Wert der aktuellen Ist-Menge gemessen wurde, besteht, und dadurch, dass der Test des Notausschaltkreises auf einwandfreies Funktionieren in der Erkennung einer Abweichung zwischen der freigegebenen Brennstoffmenge und der Ist-Brennstoffmenge, die von dem Messfühler (22) für den Wert der aktuellen Ist-Menge gemessen wurde, besteht.

4. Verfahren nach einem der Ansprüche 1 oder 3,
**dadurch gekennzeichnet,**
**dass** die Steuermittel zur Unterbrechung der Brennstoffzufuhr ein Elektroventil (16) zum Schließen bei Ausschaltung und eine Klappe (2) umfassen, wobei das Öffnen des Ventils durch den Schließsteuerbefehl (151) bei Ausschaltung bewirkt wird, wobei das Öffnen des Ventils (16) einen Druck zum Schließen der Klappe freisetzt.

5. Verfahren nach einem der Ansprüche 2 oder 3,
**dadurch gekennzeichnet,**
**dass** Steuermittel zur Unterbrechung der Brennstoffzufuhr im Falle einer Überdrehzahl ein Elektroventil (14) zum Schließen bei Überdrehzahl und eine Klappe (2) umfassen, wobei das Öffnen des Ventils im Falle einer Überdrehzahl durch den Steuerbefehl (125) ausgelöst wird, der von dem elektronischen Modul (120) zur Erkennung einer Überdrehzahl empfangen wird, wobei das Öffnen des Ventils (14) einen Druck zum Schließen der Klappe (2) freisetzt.

6. Verfahren nach einem der Ansprüche 2 oder 5,
**dadurch gekennzeichnet,**
**dass** der Zustand des Zustandsumschalters durch ein logisches Modul (140) zur Steuerung des Zustandsumschalters bewirkt wird, wobei dieses Modul eine Information (127) bezüglich der Drehzahl des Triebwerks, eine Information (128) bezüglich der Flugphase, eine Information über die Stellung der Zündsteuerung (151) des Triebwerks empfängt und verschiedene Drehzahl-Schwellenwerte empfängt oder gespeichert hat, wobei dieses logische Steuerungsmodul (140) den Umschalter in seinen Testzustand versetzt, wenn:
- das Flugzeug sich am Boden befindet und die Zündsteuerung in Zündstellung geschaltet ist;
- das Flugzeug sich im Flug befindet und der Schwellenwert der realen Überdrehzahl überschritten ist, wobei dieses Modul (140) den Umschalter in seinen Normalzustand versetzt, wenn:
- das Flugzeug sich am Boden befindet und die Zündsteuerung in Zündstellung geschaltet ist, die Drehzahl des Triebwerks großer wird als eine Drehzahl Vₐ, von der ab den Einspritzdüsen Brennstoff zugeführt werden kann, wobei diese Drehzahl Vₐ, größer ist als der Schwellenwert der Test-Überdrehzahl Vₛₜ, oder wenn das Flugzeug sich im Flug befindet und der Zustandsumschalter sich infolge einer Überdrehzahl im Testzustand befindet, die Zündsteuerung (151) von einer Zündstellung in eine Zündungs-Ausschaltstellung geschaltet wird.

## Claims

1. Method of controlling and testing an emergency shutdown system for an aircraft engine, the engine having means for delivering a signal (153) for controlling the permitted flow of fuel feeding the injectors of the engine, this control signal (153) being received by means (21) for controlling a fuel feed (18), these control means (21) adjusting the feed (18) so that it outputs the permitted flow, a sensor (22) for determining the value of the instantaneous actual rate of flow feeding the injectors of the engine, the emergency shutdown being controlled by the position (151) of a master lever, a shutdown position (151) of the master lever constituting a control (151) for actuating means (16, 2) for shutting off the inflow of the fuel entering the injectors of the engine, this control (151) for actuating the fuel shutoff means (16, 2) having priority over the permitted flow control, which device is **characterized in that** the test of correct operation of the emergency shutdown system consists in detecting a difference between the permitted fuel flow rate and the actual fuel flow rate measured by the sensor (22) for determining the actual instantaneous flow rate.

2. Method for the overspeed protection of an aircraft engine, the engine having means for delivering a signal (153) for controlling a permitted flow of fuel feeding the injectors of the engine, this permitted fuel flow control signal (153) being received by means (21) for controlling a fuel feed (18), these control means (21) adjusting the feed (18) so that it outputs the permitted flow, a sensor (22) for determining the value of the instantaneous actual rare of flow feeding the injectors of the engine, means (120, 122, 124) for detecting an actual overspeed of the engine, means (120, 122, 123) for detecting a test overspeed of the engine, these overspeed detection means (120, 122, 123, 124) delivering a control signal (125) for actuating means (2, 14) for shutting off the flow of fuel sent into the injectors, this control (125) for actuating the fuel shutoff means (2, 14) having priority over the permitted flow control, which device is **characterized in that** the detection of an actual or test overspeed is effected in an electronic logic overspeed detection module (120) that receives a quantity (127) representative of the value of the actual instantaneous rotation speed of the engine, this module (120) having a state switch (121, 143) capable of at least two states, namely a test state and a normal state, this module (120) comparing the actual rate of rotation with the test overspeed threshold, when the state switch is in the test state, and with the actual overspeed threshold, when the state switch is in the normal state, this module delivering a shutoff control signal (125) to means (2, 14) for shutting off the inflow of the fuel and **in that** the test of the correct operation of the overspeed shutdown of the engine consists in detecting a difference between the permitted fuel flow rate and the actual fuel flow rate measured by the sensor (22) for determining the actual instantaneous fuel flow rate.

3. Method of controlling and testing an emergency shutdown and overspeed protection system for an aircraft engine, the engine having means for delivering a signal (153) for controlling a permitted flow of fuel feeding the injectors of the engine, this permitted fuel flow control signal (153) being received by means (21) for controlling a fuel feed (18), these control means (21) adjusting the feed (18) so that it outputs the permitted flow, a sensor (22) for determining the value of the instantaneous actual rate of flow feeding the injectors of the engine, means (120, 122, 124) for detecting an actual overspeed of the engine, means (120, 122, 123) for detecting a test overspeed of the engine, these overspeed detection means (120, 122, 123, 124) delivering a control signal (125) for actuating means (2, 14) for shutting off the flow of fuel sent into the injectors, this control (125) for actuating the fuel shutoff means (2, 14) having priority over the permitted flow control of the means for regulating the flow of fuel feeding the injectors of the engine, emergency shutdown being commanded by the position (151) of a master lever, a shutdown position (151) of the master lever constituting a control (151) for actuating means (16, 2) for shutting off the inflow of fuel entering the injectors of the engine, this control (151) for actuating the fuel shutoff means (16, 2) having priority over the permitted fuel control, which device is **characterized in that** the detection of an actual or test overspeed is effected in an electronic logic module (120) that receives a quantity (127) representative of the value of the actual instantaneous rotation speed of the engine, this module (120) having a state switch (121, 143) capable of at least two states, namely a test state and a normal state, this module (120) comparing the actual rate of rotation with the test overspeed threshold, when the state switch is in the test state, and with the actual overspeed threshold, when the state switch is in the normal state, this module delivering a shutoff control signal (125) to means (2, 14) for shutting off the inflow of the fuel and **in that** the test of the correct operation of the overspeed shutdown of the engine consists in detecting a difference between the permitted fuel flow rate and the actual fuel flow rate measured by the sensor (22) for determining the actual instantaneous fuel flow rate and **in that** the test of the correct operation of the emergency shutdown system consists in detecting a difference between the permitted fuel flow rate and the actual fuel flow rate measured by the sensor (22) for determining the actual instantaneous flow rate.

4. Method according to either of Claims 1 and 3, **characterized in that** the emergency fuel inflow shutoff control means comprise an emergency shutoff solenoid valve assembly (16) and a valve (2), the opening of the valve assembly being brought about by the emergency shutdown control (151), the opening of the valve assembly (16) releasing a shutoff pressure of the valve.

5. Method according to either of Claims 2 and 3, **characterized in that** the means for shutting off the inflow of fuel in the event of an overspeed comprise an overspeed shutoff solenoid valve assembly (14) and a valve (2), the opening of the valve assembly being triggered in the event of an overspeed by the control signal (125) received from the electronic overspeed detection module (120), the opening of the valve assembly (14) releasing a shutoff pressure of the valve (2).

6. Method according to either of Claims 2 and 5, **characterized in that** the state of the state switch is managed by a logic module (140) for managing the state switch, this module receiving a data item (127) relating to the speed of rotation of the engine, a data item (128) relating to the flight phase and a data item about the position of the engine start control (151), and receiving, or having in memory, various speed threshold values, this logic management module (140) placing the switch in its test state if:
- the aircraft is on the ground and the start control is in the start position;
- the aircraft is in flight and the actual overspeed threshold has been exceeded, this module (140) placing the state switch in its normal state if:
- when the aircraft is on the ground and the start control is in the start position, the speed of rotation of the engine becomes greater than a speed Vₐ above which the fuel can be sent to the injectors, this speed Vₐ being above the test overspeed threshold Vₛₜ, or, when the aircraft is in flight and the state switch is in the test state on account of an overspeed, the start control (151) is switched from an on position to an off position.
